(19) **Europäisches Patentamt**

**European Patent Office**

**Office européen des brevets**

(11) **EP 1 699 001 A1**

(12) **EUROPÄISCHE PATENTANMELDUNG**

(43) Veröffentlichungstag:
06.09.2006 Patentblatt 2006/36

(51) Int Cl.:
*G06K 19/07* (2006.01)     *G06K 7/00* (2006.01)

(21) Anmeldenummer: 06003876.7

(22) Anmeldetag: 25.02.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **03.03.2005   DE 102005009765**

(71) Anmelder: **ATMEL Germany GmbH**
**74072 Heilbronn (DE)**

(72) Erfinder: **Friedrich, Ulrich, Dipl.-Ing.(FH)**
**74248 Ellhofen (DE)**

(54) **Selektionsverfahren für eine Datenkommunikation zwischen Basisstation und Transponder**

(57)     Die Erfindung betriff ein Selektionsverfahren zum Selektieren zumindest eines im Ansprechbereich einer Basisstation befindlichen Transponders, die über eine drahtlose bidirektional Datenkommunikationsstrecke miteinander gekoppelt sind, bei dem die Basisstation ein elektromagnetisches Trägersignal aussendet, welches zumindest ein Arbitrationssymbol aufweist, wobei jedes Arbitrationssymbol einen Anfragebereich aufweist, in dem von der Basisstation Daten aufcodiert sind, und einen Antwortbereich aufweist, der von dem Transponder zur Codierung und Modulation von Informationen für die Datenrückübertragung nutzbar ist, wobei die Selektion eines Transponders auf der Basis unterscheidbarer Zeitpunkte für die Modulation im Zeitbereich erfolgt, die aus einer Referenzzeit gebildet werden, welche aus dem Arbitrationssymbol selbst abgeleitet wird.

FIG.3a

FIG.3b

FIG.3c

**Beschreibung**

Die Erfindung betrifft ein Selektionsverfahren für eine Datenkommunikation zwischen Basisstation und Transponder.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend in Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Bei Transpondern wird ein von einer Basisstation ausgesendetes elektromagnetisches Signal von dem Transponder aufgenommen und demoduliert. Man unterscheidet hier aktive, semipsssive und passive Transpunder, je nach dem wie deren Energieversorgung ausgebildet ist. Im Unterschied zu aktiven Transpondern weisen passive Transponder keine eigene Energieversorgung auf, so dass die im Transponder für die Demodulation und Dekodierung des empfangenen elektromagnetischen Signals benötigte Energie aus dem von der Basisstation gesendeten elektromagnetischen Signal selbst entnommen werden muss. Neben dieser unidirektionalen Energieübertragung erfolgt typischerweise auch eine bidirektionale Datenkommunikation zwischen Basisstation und Transponder, die nachfolgend noch genauer beschrieben wird.

In den meisten UHF- und Mikrowellen-basierenden RFID-Systemen bzw. Sensorsystemen wird die bidirektionale Datenkommunikation zwischen Basisstation und Transponder zunächst von der Basisstation eingeleitet, indem von der Basisstation ein Anfragesignal (Kommando, data request) zu den verschiedenen, sich in der Umgebung der Basisstation befindlichen Transpondern gesendet wird. Der oder die an der Datenkommunikation teilnehmenden Transponder reagieren auf diese Anfrage typischerweise mit einem Antwortsignal (response). Solche RFID-Systeme werden auch als Master-Slave-Systeme bezeichnet. Bei Master-Slave-basierenden RFID-Systemen wird die Datenkommunikation zwischen Basisstation und Transponder von der Basisstation gesteuert. Grundlage der bidirektionalen Datenübertragung zwischen Basisstation und Transponder bildet ein so genanntes Kommunikationsprotokoll, das neben den zu übertragenden Dateninformationen auch Steuerinformationen für die Datenkommunikation festlegt. Ein gattungsgemäße RFID-Kommunikationsprotokoll für Datenkommunikation zwischen Basisstation und Transponder ist in der DE 101 38 217 A1 beschrieben.

Für die Datenrückübertragung (Rückwärtslink) von dem Transponder zurück zu der Basisstation wird unter anderem die so genannte Backscatter- oder Rückstreutechnik eingesetzt.. Bei diesem Verfahren werden zunächst von der Basisstation hochfrequente elektromagnetische Trägersignale emittiert. die von der Sende- und Empfangseinrichtung des Transponders aufgenommen und verarbeitet werden. Darüber hinaus werden die empfangenen Trägersignale mit einem gängigen Modulationsverfahren moduliert und unter Verwendung des Rückstreuquerschnitts der Sende/ Empfangsantenne des Transponders wieder zurück gestreut. Ein bekanntes RFID-Kommunikationssystem, bei dem die Datenrückübertragung unter Verwendung des Backscatter-Verfahrens erfolgt, ist in der EP 750 200 B1 beschrieben.

Beim Betrieb eines RFID-Systems sind einer Basisstation, die häufig auch als Reader oder Lesegerät bezeichnet wird, typischerweise eine Vielzahl von Transponder (oder auch Tags oder Etiketten) zugeordnet, welche sich gleichzeitig im Ansprechbereich der Basisstation befinden können. Um nun Daten von vielen einzelnen Transpondern innerhalb der Reichweite (Ansprechbereich) der Basisstation eben an diese Basisstation zurück übertragen zu können, existiert ein so genanntes Vielfach-Zugriffsverfahren. Dabei wir die vorhandene Kanalkapazität den einzelnen Transpondern so zugeteilt, dass eine Übertragung von Daten von mehreren Transpondern an die Basisstation ohne gegenseitige Störung (Kollision) stattfinden kann. Die technische Realisierung eines Vielfach-Zugriffs bei RFID-Systemen stellt einige Anforderungen an Transponder und Basisstation, denn es muss ohne spürbaren Zeitaufwand zuverlässig verhindert werden, dass von den Transpondern rückübertragenen Daten im Empfänger der Basisstation miteinander kollidieren und dadurch unlesbar werden. In der Literatur sind dabei verschiedenste Selektionsverfahren für Master-Slave-basierende RFID-Systeme bekannt, wobei das wohl Bekannteste und Bevorzugte das Anti-Kollisionsverfahren ist, da es ein Zugriffsprotokoll aufweist, welches die störungsfreie Abwicklung eines Vielfach-Zugriffs ermöglicht.

Beruht ein Anti-Kollisionsverfahren (Selektionsverfahren) auf einer Abitration (Zuweisung), in deren Verlauf nacheinander alle Transponder bzw. auch Gruppen von Transpondern selektiert werden, dann erhält ein jeweiliger Transponder von der Basisstation über den Vorwärtslink ein Abitrationssymbol (Anfrage- bzw. Quittungssymbol). Diese Abitration kann im Halbduplex- oder im Vollduplexverfahren implementiert werden, wenngleich das Vollduplexverfahren aufgrund der dadurch realisierten höheren Geschwindigkeit grundsätzlich von Vorteil ist.

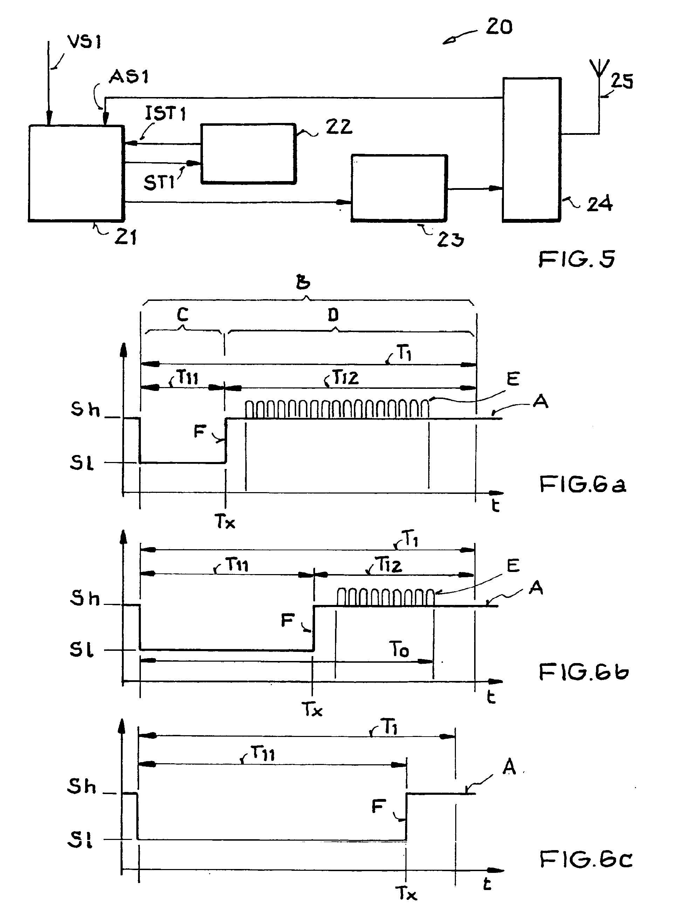

Fig. 6 zeigt die Struktur eines Abitrationssymbols für ein bekanntes Vollduplex Anti-Kollisionsverfahren. Im Vollduplexverfahren sendet die Basisstation ein Trägersignal A, die ein oder mehrere Abitrationssymbole B der Dauer T1 umfasst, an den oder die Transponder. Wie in Fig. 6 zu erkennen, umfasst das Abitrationssymbol B einen Abfragebereich C der Dauer T11 und einen Antwortbereich D der Dauer T12. Abfragebereich C und Antwortbereich D unterscheiden sich voneinander durch unterschiedlich Signalpegel Sh, Si, das heißt der Anfragebereich C weist einen nied-

EP 1 699 001 A1

rigen Signalpegel Sl auf und der Antwortbereich D weist einen hohen Signalpegel Sh auf. Dies kann durch die Basisstation beispielsweise durch ein Ausschalten des e-lektro-magnetischen Feldes oder durch ein Absenken der Sendeleistung übermittelt werden. Innerhalb der Dauer T12 des Antwortbereichs D ist der Transponder in der Lage, unter Verwendung des oben beschriebenen Back-Skatterverfahrens ein Antwortsignal E zurück an die Basisstation zu senden. Ein entsprechend Fig. 6 ausgebildetes bekanntes Arbitrations-Protokoll wird beispielsweise von der Firma Matrics verwendet.

Im Protokoll der Datenübertragung bei den anhand von Fig. 6a-6c beschriebenen Abitrationsverfahren erfolgt die Kodierung im Vorwärtslink durch eine unterschiedliche Dauer T11 des Anfragebereichs C und damit auch des Antwortbereichs D. Die Teilfiguren Fig. 6a-6c zeigen das Protokoll, bei dem durch Variation der Dauer T11 des Abfragebereichs C eine logische "0" (Fig. 6a), eine logische "1" (Fig. 6b) und ein EOT-Symbol (Fig. 6c) (EOT = End of Transmission) übertragen wird. Der Zeitpunkt Tx eines Signalwechsels F zwischen dem niedrigen logischen Pegel (low) und dem hohen logischen Pegel (high) definiert, ob in einem aktuellen Rahmen T1 eines Arbitrationssymbols B eine logische "0", eine logische "1" oder ein EOT-Signal gesendet wurde. Diese Zeitpunkte Tx für die unterschiedlichen Kodierungen sind bezogen auf den jeweiligen Rahmen fest vorgegeben. Allerdings kennt der Transponder zu Beginn einer Datenkommunikation bzw. des Arbitrationsverfahrens diese Zeitpunkte Tx typischerweise noch nicht. Aus diesem Grunde sieht das Protokoll der Datenübertragung bei einem Master-Slavebasierten RFID-System vor, dass von der Basisstation vor der eigentlichen Datenkommunikation eine Referenzzeit als Referenzmarke an den oder die an der Datenkommunikation teilnehmenden Transponder übermittelt wird, die eben Auskunft über die vorgegebenen Zeitpunkte für einen Signalwechsel gibt. Diese Referenzzeit Tref wird von dem Transponder abgespeichert. Die gemäß dem verwendeten Protokoll der Datenübertragung verwendeten Symbole ("0", "1", EOT), welche von der Basisstation zur Datenkommunikation mit dem Transponder gesendet werden, lassen sich dann durch arithmetische Ableitung aus der Referenzzeit ableiten.

Die Arbitration an der Bitstelle n beginnt mit einem Abfrage- bzw. Quittungssymbol der Basisstation, in der die Basisstation dem Transponder mitteilt, welche Wertigkeit ("0" oder "1 ") der Transponder an der jeweiligen Bitstelle n haben muss, damit dieser weiterhin an der Abitration teilnehmen kann. Ist diese Bedingung erfüllt, dann übermittelt der Transponder im Antwortbereich unter Anwendung der Hilfsträgermodulation durch Backscattering die Wertigkeit der Bitstelle n+1 an die Basisstation. Die Basisstation wertet diese zurückgestreuten Antwortsignale im Frequenzbereich aus und übermittelt daraufhin dem jeweiligen Transponder das nächste Symbol für die nächste Bitstelle, etc. Sendet er ein Abfrage- bzw. Quittungssymbol der Wertigkeit EOT, dann signalisiert dieses Symbol dem Transponder dass das Ende der Abitration erreicht ist und der oder die bis dahin selektierten Transponder aktiv bleiben.

Damit die Basisstation die von dem Transponder durch Backscattering zurückgesendeten Daten von den von der Basisstation im Vorwärtslink gesendeten Daten unterscheiden zu können, werden hier die durch das Backscattering im Rückwärtslink erzeugten Seitenbänder (oder auch Hilfsträger oder Nebenbänder) genutzt. Die Basisstation nimmt also das durch Backscattering zurückgesteuerte Trägersignal auf und wertet die entsprechenden Seitenbänder aus, indem sie deren Amplituden und Frequenzen auswertet.

Allerdings hat dieses bekannte Verfahren mehrere Nachteile:

1. In den unterschiedlichen Ländern existieren aufgrund der dort geltenden, so genannten HF/RF-Regularien jeweils unterschiedliche zugelassene Frequenzbänder für die Datenkommunikation. Diese Regularien schreiben u.a. vor, dass die durch Backscattering erzeugten Seitenbänder innerhalb eines eng umgrenzten Frequenzbereiches, der länderspezifisch festgelegt sein kann, liegen müssen, um beispielsweise benachbarte Frequenznutzbänder nicht negativ zu beeinflussen. Aufgrund dessen ist es erforderlich, die verwendeten Seitenbänder innnerhalb sehr enger Toleranzen zu garantieren. Hierfür ist die Verwendung eines hoch genauen Oszillators erforderlich, um diese Forderung über den gesamten Spannungs- und Temperaturbereich des Transponders zu garantieren. Dies geht allerdings mit einem relativ hohen Leistungsverbrauch einher, der sich z. B. bei passiven Transpondern direkt in einer entsprechend niedrigeren Reichweite der Datenkommunikation niederschlägt.

2. Die höhere Frequenz der beiden Seitenbänder darf nicht ein gerades Vielfaches der jeweils niedrigeren Frequenz sein, da ansonsten die Harmonischen mehr oder weniger gleich sind und somit eine genaue Bestimmung der Frequenz der Seitenbänder durch die Basisstation aufgrund der Mehrwegeausbreitung und damit einhergehend der konstruktiven und destruktiven Interferenzen nicht mehr möglich ist. Aus diesen Gründen sind - typischerweise um mindestens den Faktor drei - höhere Oszillatorfrequenzen erforderlich. Dies geht allerdings ebenfalls mit einem erhöhten Strombedarf des Transponders einher, was es allerdings aufgrund der begrenzten Energie des Transponders und aufgrund der Reichweite zu vermeiden gilt.

3. Das oben im Zusammenhang mit Fig. 6 dargestellte Protokoll der Firma Matrics verwendet Hilfsträger von etwa 2,5 MHz. Derart hohe Frequenzen liegen typischerweise außerhalb der erlaubten Bandbreite vieler Länder wie den europäischen Ländern und den USA. Da die in Europa für die Übertragung eines Abitrationssymbols erforderliche Bandbreite nur etwa 250KHz beträgt, also 125 KHz für jedes Seitenband, ist das oben beschriebene Verfahren von Matrics in Europa derzeit nicht zugelassen. Eine Verstellung in den Kilohertzbereich (bis 125 KHz) ist zwar erlaubt, würde aber das Abitrationssymbol wesentlich verlängern, was dann aber unerwünschterweise zu geringeren Datenübertragungsraten führen würde. Darüber hinaus müsste diese Hilfsträgerfrequenz einstellbar sein, um auch bei anderen Bandbreiten Verwendung finden zu können.

4. Um die HF-Regularien zu erfüllen und/oder um hohe Datenübertragungsraten (BER= bit error rate) zu erzielen, ist es von Vorteil, dass die Referenzzeit groß gewählt wird. Allerdings ergeben sich dadurch erheblich Modulationsverluste, was allerdings unerwünschterweise zu einer Reduzierung der erzielbaren Reichweite der Datenkommunikation zwischen Basisstation und Transponder führt.

5. Darüber hinaus ist auch die Datenübertragungsrate aufgrund der in Europa geltenden HF-Regularien relativ niedrig. Zur Auswertung im Frequenzbereich sind je nach Qualität der Basisstation mehrere Perioden eines Hilfsträgers erforderlich, um die Frequenz der Hilfträger sicher zu erkennen. Dies setzt allerdings die Datenübertragungsrate und damit die Datenübertragungsgeschwindigkeit signifikant herab. Da die höchste, in Europa derzeit zugelassene Hilfsträgerfrequenz 125 KHz beträgt, ergibt sich bereits bei fünf Perioden eine minimale Antwortzeit von 40 $\mu$sec. Eine derart hohe Antwortzeit ist bei derzeitigen RFID-Systemen zu groß. Heutige RFID-Systeme, die sich UHF-Trägersignalen bedienen, weisen eine Datenübertragungsgeschwindigkeit von bis zu 40 kbit/sec auf, was einer Bitzeit von etwa 25 msec für die Antwort entspricht. Hinzu kommt, dass die niedrigere der beiden Hilfsträgerfrequenzen kein ganzzahliges Vielfaches der jeweils höheren Hilfsträgerfrequenzen sein darf, um gemeinsame Seitenbänder auszuschließen, was insgesamt die maximale Datenübertragungsrate noch weiter verringert.

Unter Verwendung der Hilfsträgermodulation können die eingangs erwähnten Erfordernisse, also geringer Stromverbrauch, niedrige Oszillatorfrequenz, große Oszillatortoleranzen, nicht zufriedenstellend erfüllt werden.

Vor diesem Hintergrund liegt der vorliegenden Erfindung die Aufgabe zugrunde, eine Datenkommunikation zwischen Basisstation und Transponder bereitzustellen, bei der unter Ausnutzung gegebener Seitenbänder eine optimale Datenübertragungsrate gewährleistet ist. Eine weitere Aufgabe sieht vor, zumindest zwei voneinander unterscheidbare Signal nach Empfang und Auswertung des Abfragesignals durch den Transponder zurück zu übertragen. Eine weitere Aufgabe sieht vor, eine einfach zu realisierende Datenkommunikation zwischen Basisstation und Transponder bereitzustellen, die einerseits weltweit einsetzbar ist und die andererseits den Strombedarf des Transponder minimiert, wobei dadurch insbesondere die Struktur des Datenkommunikationsprotokolls erhalten bleiben sollte.

Erfindungsgemäß wird zumindest eine dieser Aufgaben durch ein Selektionsverfahren mit den Merkmalen des Patentanspruchs 1 gelöst.

Demgemäß ist ein Selektionsverfahren zum Selektieren zumindest eines im Ansprechbereich einer Basisstation befindlichen Transponders, die über eine drahtlose bidirektional Datenkommunikationsstrecke miteinander gekoppelt sind, vorgesehen, bei dem die Basisstation ein elektromagnetisches Trägersignal aussendet, welches zumindest ein Arbitrationssymbol aufweist, wobei jedes Arbitrationssymbol einen Anfragebereich aufweist, in dem von der Basisstation Daten aufcodiert sind, und einen Antwortbereich aufweist, der von dem Transponder zur Codierung und Modulation von Informationen für die Datenrückübertragung nutzbar ist, wobei die Selektion eines Transponders auf der Basis unterscheidbarer Zeitpunkte für die Modulation im Zeitbereich erfolgt, die aus einer Referenzzeit gebildet werden, welche aus dem Arbitrationssymbol selbst abgeleitet wird.

Der wesentliche Vorteil der vorliegenden Erfindung besteht darin, dass die Modulation und Auswertung der vom Transponder im Antwortbereich kodierten Information im Zeitbereich stattfinden kann, was sehr einfach zu realisieren ist.

Mittels des erfindungsgemäßen Verfahrens lassen sich nach Empfang und Auswertung des Abfragesignals zumindest zwei voneinander unterscheidbare Signale von dem Transponder an die Basisstation zurück übertragen, ohne dass damit die oben beschriebenen Nachteile bekannter Verfahren einher gehen. Mittels des erfindungsgemäßen Verfahrens bleibt insbesondere die Struktur der Datenübertragung erhalten, es ändert sich lediglich die Bereitstellung der Information im Antwortbereich des gesendeten Arbitrationsymbols. Auf diese Weise wird eine einfach zu realisierende Lösung gefunden, die einerseits weltweit einsetzbar ist, da sie eine adaptive Möglichkeit zur Erfüllung der unterschiedlichen HF-Regularien bietet, und die andererseits den im Transponder erforderlichen Strombedarf minimiert.

Das erfindungsgemäße Verfahren beruht darauf, dass es nach dem Abfragebereich zwei oder mehr voneinander unterscheidbare Referenzzeitpunkte gibt, an denen der Transponder die Modulation im Rückwärtslink entsprechend der Wertigkeit des n+1ten Wertes ändert. Das Arbitrationssymbol wird dabei in eine Anzahl gleich großer Bereiche unterteilt, die jeweils ein Mehrfaches der Dauer des gesendeten Arbitrationssymbol sind, die aber kleiner als die Zeit zur Markierung eines EOT-Signals sind. Im Anschluss daran kann sich dann die Modulationsänderungssequenz wiederholen. Diese Unterteilung wird anhand von einer beispielsweise im Kopfabschnitt des Kommunikationsprotokolls übermittelten Referenzzeit vorgegeben. Insgesamt führt dies zu besseren Bitfehlerraten (BER).

Durch eine geeignete Wahl der Referenzdauer und der Dauer eines Zeitrahmens ist es möglich, die Übertragungsrate innerhalb eines bestimmten Bereichs an die Übertragungsbedingungen anzupassen.

Um die Zeiten der Modulationsänderung zwischen dem Anfragebereich und Antwortbereich zu bestimmen, dass heißt zur Bestimmung der Signalwechsel zwischen niedrigem Signalpegel und hohem Signalpegel und umgekehrt, wird ein sehr elegantes und sehr einfaches erfindungsgemäßes Verfahren vorgeschlagen. Damit der Transponder verlässlich erkennt, ob das von der Basisstation gesendete Datensignal eine "0", eine "1" oder EOT ist, muss der Transponder aus der Referenzzeit die entsprechenden drei, vorzugsweise gleich großen Zeitabschnitte für eine "0", eine "1" oder ein EOT ableiten können. Im einfachsten Falle erfolgt dies dadurch, dass ein Zeitrahmen durch drei geteilt wird. Eine Teilung durch drei ist allerdings schaltungstechnisch bzw. auch softwaretechnisch sehr schwer realisierbar. Die besondere Idee der vorliegenden Erfindung besteht nun darin, die von der Basisstation vorgegebene Referenzzeit durch vier zu teilen, um dadurch vier gleich große Zeitabschnitte zu erhalten. Von diesen vier Abschnitten werden lediglich die drei, zum Beispiel die ersten oder die letzten drei, herangezogen, um dadurch drei gleichgroße Abschnitte zu erhalten, die zusammen der Dauer eines Zeitrahmens entsprechen. Die Unterteilung der Zeitreferenzdauer in vier gleich große Abschnitte ist mittels eines Multiplexers auf sehr einfache Weise erzeugbar.

Unter der ersten Voraussetzung, dass die Zeitreferenz größer als die Dauer eines Zeitrahmens für ein Arbitrationssymbol ist, lassen sich so durch geeignete Wahl der Zeitreferenz und der Dauer eines Zeitrahmens jeweils drei gleichgroße Abschnitte eines Zeitrahmens ableiten. Der besondere Vorteil besteht hier darin, dass damit für eine "0" und eine "1" jeweils gleiche Seitenbänder des Frequenzspektrums vorhanden sind. Dies gestaltet die transponderseitige Modulation für die Datenrückübertragung sowie die basisstationenseitige Auswertung signifikant einfacher. Insbesondere ergibt sich dadurch ein deutlich geringerer Stromverbrauch des transponderinternen Oszillators, was sich in einer deutlich größeren Reichweite bemerkbar macht.

Der nicht verwendete vierte Abschnitt der Zeitreferenz kann zum Beispiel als Sicherheitsebene (Parity-Bit oder CRC) verwendet werden und somit einer zusätzliche Funktionalität enthalten. Zwar geht damit eine niedrigere Datenübertragungsrate einher, jedoch erhöht dies die Funktionalität.

Vorteilhafte Ausgestaltungen und Weiterbildungen der Erfindung sind den weiteren Unteransprüchen sowie in der Beschreibung unter Bezugnahme auf die Zeichnung entnehmbar.

In einer besonders bevorzugten Ausgestaltung des erfindungsgemäßen Verfahrens erfolgt die Modulation der für die Datenrückübertragung vorgesehenen Information und/oder deren Auswertung durch die Basisstation im Zeitbereich.

In einer bevorzugten Ausgestaltung sind der Anfragebereich und Antwortbereich durch unterschiedliche Amplituden des Trägersignals definiert, wobei der Anfragebereich einen ersten logischen Pegel und der Antwortbereich einen zweiten logischen Pegel des Trägersignals aufweisen. Die unterscheidbaren Zeitpunkte sind also typischerweise durch Signalwechsel zwischen benachbarten Anfragebereichen und Antwortbereichen definiert.

In einer besonders vorteilhaften Ausgestaltung des werden die im Antwortbereich codierten Informationen im Vollduplexverfahren insbesondere unter Verwendung des Backscatter-Verfahrens zu der Basisstation zurück übertragen.

Eine bevorzugte Weiterbildung des erfindungsgemäßen Verfahrens sieht vor, dass das Verfahren neben der Selektion einzelner Transponder auch zur Selektion von Gruppen von Transpondern vorgesehen sein kann.

In einer besonders bevorzugten Ausgestaltung des erfindungsgemäßen Verfahrens wird die Referenzzeit aus der Dauer eines Arbitrationssymbols, zum Beispiel aus einem Rahmen des Trägersignals. Zusätzlich oder alternativ kann auch vorgesehen sein, dass die Referenzzeit aus der Dauer eines anderen Symbols des Trägersignals abgeleitet wird.

Vorzugsweise werden die Modulationszeitpunkte direkt aus der Referenzzeit durch binäres Teilen der Referenzzeit in gleich große Zeitabschnitte oder durch binäres Vervielfachen der Referenzzeit berechnet. Für unterschiedliche Modulationszeitpunkte können dabei eine unterschiedliche Anzahl der Zeitabschnitte und/oder ein unterschiedliches Vielfaches der Zeitabschnitte vorgesehen sein.

In einer besonders bevorzugten Ausgestaltung des erfindungsgemäßen Verfahrens sind zur Codierung zweier unterscheidbarer Modulationszeitpunkte drei gleich große Zeitabschnitte vorgesehen. Jeder Zeitabschnitt entspricht dabei der Referenzzeit selbst oder einem binären Vielfachen der Referenzzeit. Zur Codierung zweier unterscheidbarer Modulationszeitpunkte sind dann drei gleich große Zeitabschnitte vorgesehen, die erfindungsgemäß durch Teilen aus der Referenzzeit abgeleitet werden.

Eine ebenfalls sehr besonders bevorzugten Weiterbildung sieht vor, dass die Referenzzeit und die Dauer eines Arbitrationssymbols durch die Basisstation so vorgegeben werden, dass durch Teilen der Referenzzeit durch vier gleich große Zeitabschnitte drei dieser Zeitabschnitte für die Codierung der beiden unterscheidbaren Modulationszeitpunkte verwendbar sind.

Das Protokoll der Datenkommunikation ist so ausgebildet, dass das Trägersignal mehrere Arbitrationssymbole aufweist, die vorzugsweise jeweils eine gleiche Symboldauer aufweisen.

In einer besonders bevorzugten Ausgestaltung des erfindungsgemäßen Verfahrens eine Master-Slave-basierte Datenkommunikation zwischen Basisstation und Transponder vorgesehen ist, bei von der Basisstation elektromagnetische Trägersignale ausgesendet werden, auf denen Informationspakete aufmoduliert sind, wobei jeweils ein Informationspaket einen Kopfabschnitt, einen Mittelabschnitt und einen Endabschnitt aufweist, wobei der Kopfabschnitt zur Steuerung der Datenkommunikation vorgesehen ist. Vorzugsweise wird dabei die Referenzzeit im Kopfabschnitt übertragen.

Eine besonders Weiterbildung des erfindungsgemäßen Verfahrens sieht vor, dass die Modulation durch einen Zähler, insbesondere durch eine analoge Zeitmesseinheit, gesteuert wird. Der Zähler ist bevorzugt dazu ausgelegt, nach dem Beginn der Modulation den Endpunkt der Modulation zu bestimmen.

In einer bevorzugten Ausgestaltung ist der Zähler lediglich zum Zeitpunkt der Modulation für die Datenrückübertragung aktiv. Insbesondere wird der Zähler nach dem Erreichen des Endzeitpunktes inaktiv geschaltet.

In einer besonders bevorzugten Ausgestaltung des erfindungsgemäßen Verfahrens beginnt der Zähler mit einem fest definierten Startzeitpunkt zu zählen. Dabei wird ein aktueller Zählerstand des Zählers ständig mit weiteren Referenzdauern verglichen, die die Modulationszeitpunkte definieren, wobei die Modulation geändert wird, falls der aktuelle Zählerstand des Zählers eine der weiteren Referenzdauern erreicht.

Die Erfindung wird nachfolgend anhand der in den schematischen Figuren der Zeichnung angegebenen Ausführungsbeispielen näher erläutert. Es zeigen dabei:

Fig. 1        die grundsätzliche Struktur (Protokoll) eines Informationspaketes einer Datenkommunikation zwischen Basisstation und Transponder;

Fig. 2a-c     anhand den Aufbau eines von der Basisstation gesendeten Arbitrationssymbols zur Veranschaulichung der erfindungsgemäßen Codierung mittels gleich großer Zeitabschnitte;

Fig. 3a-c     das Prinzip zur Veranschaulichung der erfindungsgemäßen Erzeugung dreier gleich großer Abschnitte aus einer Referenzzeitdauer;

Fig. 4        ein Signal-Zeit-Diagramm zur Darstellung eines Ausführungsbeispiels der Übertragung einer Information im Arbitrationssymbol;

Fig. 5        anhand eines Blockschaltbildes den Aufbau eines erfindungsgemäßen Transponders mit Steuereinrichtung und Modulationseinrichtung zur Durchführung des erfindungsgemäßen Verfahrens;

Fig. 6        ein Arbitrations-Protokoll für ein im Vollduplex gesendetes Abitrationssymbol, wie es beispielsweise von der Firma Matrics verwendet wird.

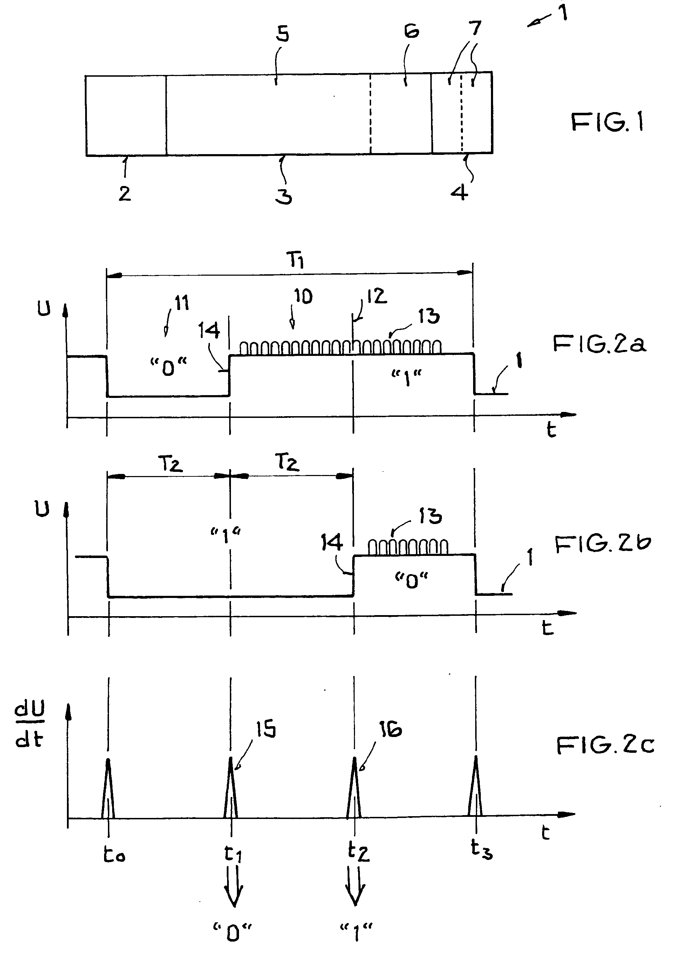

In den Figuren der Zeichnung sind gleiche und funktionsgleiche Elemente, Daten und Signale - sofern nichts Anderes angegeben ist - mit denselben Bezugszeichen versehen worden. Die Darstellungen in den Fig. 1 - 4, 6 beziehen sich jeweils auf die zeitliche Abfolge einer jeweiligen Datenkommunikation.

Fig. 1 zeigt zunächst die grundsätzliche Struktur eines Informationspaketes 1, wie sie für eine Datenkommunikation zwischen einer Basisstation und einem Transponder verwendet wird und wie sie beispielsweise aus der eingangs genannten Offenlegungsschrift DE 101 38 217 A1 heraus bekannt ist.

Das Informationspaket 1 weist einen Kopfabschnitt 2, einen Mittelabschnitt 3 sowie einen Endabschnitt 4 auf. Über den Kopfabschnitt 2 werden die Anzahl der zu übertragenden Daten und deren Kennung sowie bei vielen Anwendungen auch Steuerinformationen definiert. Insbesondere gibt der Kopfabschnitt 2 Referenzzeiten vor, die für die weitere Datenübertragung im Mittelabschnitt 3 bzw. Datenfeld 5 verwendet werden. Der Mittelabschnitt 3 enthält die jeweils zu übertragenden Daten, wobei in einigen Anwendungen vorzugsweise auch der Mittelabschnitt 3 zu Steuerungszwecken verwendet werden kann. Der Mittelabschnitt 3 besteht typischerweise aus einem Datenfeld 5 sowie einem diesem Datenfeld 5 unmittelbar nachgeschalteten Sicherungsfeld 6. Im Mittelabschnitt 3 werden kodierte Datensymbole übertragen. Abgesichert wird die Datenkommunikation mit Sicherungsmechanismen wie zum Beispiel einem CRC-Sicherungsfeld 6 oder Parity-Bits. Der Inhalt des Endabschnitts 4 zeigt dem jeweiligen Empfänger des gesendeten Informationspakets 1 das Ende desselben an. Beispielsweise kann der Endabschnitt 4 zwei so genannte EOT-Symbole 7 (EOT = End of Transmission) aufweisen.

Fig. 2 zeigt den Aufbau eines von der Basisstation gesendetes Arbitrationssymbols zur Veranschaulichung der erfindungsgemäßen Codierung mittels gleich großer Zeitabschnitte.

In Fig. 2 sind zwei Arbitrationssymbole 10 der Dauer T1 enthaltend einen Abfragebereich 11 und einen Antwortbereich 12 dargestellt. In Fig. 2a ist dabei ein Arbitrationssymbol 10 zur Übertragung einer "0" und in Fig. 2b ist ein Arbitrationssymbol 10 zur Übertragung einer "1" dargestellt. Zur Codierung und damit zur Übertragung der Daten ("0", "1") ist ein Arbitrationssymbol 10 in drei gleich große Zeitabschnitte der Dauer T2 unterteilt. Ein Arbitrationssymbol 10 enthaltend eine "0" unterscheidet sich von einem Arbitrationssymbol 10 enthaltend eine "1" durch unterschiedlich lange Anfragebereiche 11. Ein Signalwechsel 14 zwischen dem Anfragebereich 11 und dem Antwortbereich 12 erfolgt im Falle einer zu übertragenden "0" zum Zeitpunkt t1 und im Falle einer zu übertragenden "1" zum Zeitpunkt t2, wobei die Dauer T2 des Anfragebereiches 11 im Falle einer zu übertragenden "0" genau halb so groß ist, wie die Zeitdauer 2*T2 im Falle einer zu übertragenden "1". In Fig. 2(C) ist die zeitliche Ableitung dU/dt des Signalverlaufs der Arbitrationssignale 10 der Fig. 2(A) und (B) dargestellt. Im Falle einer zu übertragenden "0" ergibt sich (im Idealfall) ein Dirac-Impuls 15 zum Zeitpunkt t1 und im Falle einer zu übertragenden "1" befindet sich der Dirac-Impuls 16 beim Zeitpunkt t2.

Im Antwortbereich sind 12 Antwortsignale 13 auf dem Arbitrationssymbol 10 aufmoduliert, beispielsweise durch FSK Backscatter-Modulation des Trägersignals 19 im Antwortbereich 12. Im vorliegenden Ausführungsbeispiel sei angenommen, dass in Fig. 2a durch das Backscatter modulierte Antwortsignal 13 eine "1" zurück zur Basisstation übertragen werden soll und in Fig. 2b eine "0" durch das Antwortsignal 13 zurück übertragen werden soll.

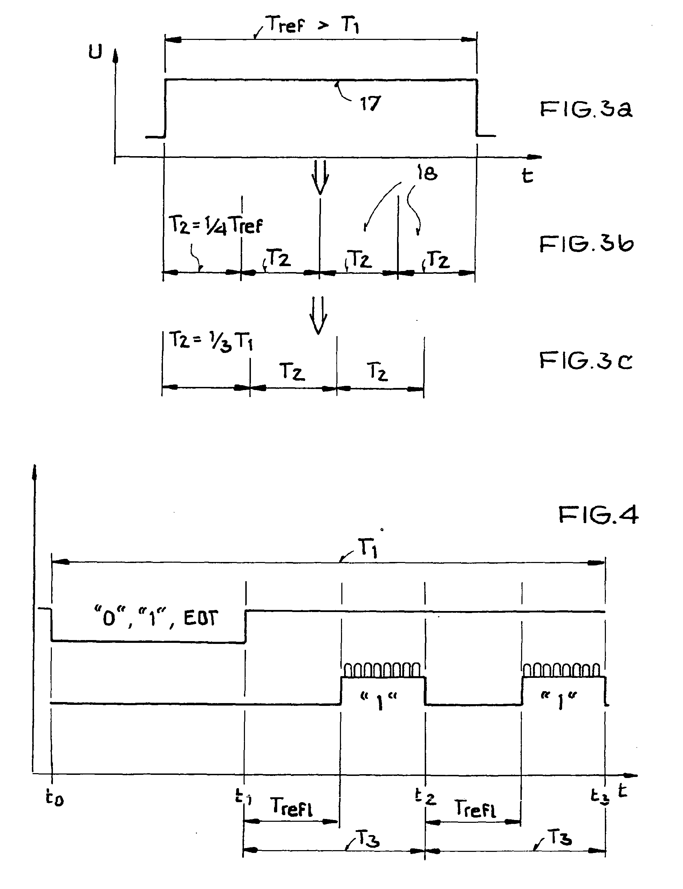

Fig. 3 zeigt anhand einer Ablaufdarstellung (Fig. 3a-3c) das Prinzip zur Erzeugung dreier gleich großer Abschnitte 18 aus einer Referenzdauer. Zu Beginn einer Datenübertragung übermittelt die Basisstation, beispielsweise im Kopfabschnitt der Datenkommunikation, eine Referenzmarke 17 der Dauer Tref (siehe Fig. 3a). Die Dauer Tref ist größer als die Dauer T1 eines Rahmens eines Arbitrationssymbols 10. Beispielsweise mittels eines Multiplexers wird diese Dauer Tref nun in einem oder mehreren Schritten in vier gleich große Zeitabschnitte der Dauer T2 = ¼ * Tref unterteilt (siehe Fig. 3b).

Im nächsten Schritt (siehe Fig. 3c) werden drei dieser Abschnitte 18 der Dauer T2 herausgegriffen, die nun für die anhand von Fig. 2 dargestellte Datenkommunikation im Vorwärtslink und Rückwärtslink der Datenkommunikation herangezogen werden. Für jeden dieser Abschnitte 18 ist nun die Bedingung T2 = 1/3 * T1 erfüllt, wobei T1 die Dauer eines Arbitrationssymbols 10 bezeichnet.

Der besondere Vorteil besteht hier darin, dass sowohl das diracförmige Signal 15 zum Zeitpunkt t1, wie auch das diracförmige Signal 16 zum Zeitpunkt t2 die gleichen Seitenbänder aufweisen, das heißt sowohl für eine "0" als auch für eine "1" werden auf diese Weise gleiche Seitenbänder gewährleistet, was für das gesamte Frequenzspektrum im Basisband und damit für die gesamte Datenkommunikation sehr vorteilhaft ist.

Es muss von der Basisstation also lediglich sichergestellt werden, dass folgende Bedingungen für T1, T2 und Tref erfüllt sind:

$$Tref > T1 \qquad\qquad (1)$$

$$T2 = ¼ \times Tref \qquad\qquad (2)$$

$$T2 = 1/3 \times T1 \qquad\qquad (3).$$

Auf diese Weise lassen sich durch sehr einfache, jedoch nichts destotrotz sehr effektive und elegante Weise drei gleich große Abschnitte 18 bereitstellen, die für eine entsprechend in Fig. 2 dargestellte Datenkommunikation, die eben drei gleich große Abschnitte 18 für die Codierung verwendet, herangezogen werden können. Der besondere Vorteil besteht hier darin, dass durch die Wahl dreier gleich großer Abschnitte, bei denen also ein Signalwechsel ausschließlich bei einem Übergang von einem Abschnitt zu dem anderen Abschnitt 18 stattfinden kann, der Transponder auch nur die entsprechenden Zeitpunkte dieser Wechsel überwachen muss und die Datenrückübertragung entsprechend darauf ausrichten muss. Darüber hinaus ist diese Form der Datenrückübertragung insbesondere hinsichtlich des Frequenzspektrums im Basisband besonders vorteilhaft, da hier jeweils gleiche Seitenbänder vorliegen.

Diese Art der Codierung, bei der innerhalb eines Rahmens eines zu übertragenden Symbols zwei Bits gleichzeitig übertragen werden, wird allgemein auch als so genannte 3phase1-Codierung bezeichnet.

Um die Zeiten für die Modulationsänderung möglichst genau bestimmen zu können, bietet sich auch eine erweiterte Möglichkeit an, die anhand des nachfolgenden Ausführungsbeispiels in Fig. 4 näher erläutert werden. Fig. 4 zeigt ein Signal-Zeit-Diagramm zur Darstellung der Übertragung einer Information im Abitrationssymbol. Der Modulationsstrom des Transponders ist dabei unterhalb des Abitrationssymbols dargestellt. Im gezeigten Beispiel in Fig. 4 wird im Rückwärtslink durch den Transponder zweimal eine Information "1" zurück zur Basisstation übertragen. Denkbar wäre hier auch, dass lediglich eine einzige Information oder mehr als zwei Informationen zurückübertragen werden.

Zuerst wird eine Referenzzeit Tref vorgegeben. Diese Referenzzeit wird z. B. durch zwei bzw. vier geteilt. Es ergeben sich dadurch unterschiedliche Referenzzeiten Tref1 und Tref0 entsprechend der Wertigkeit von "1" bzw. "0". Werden mehrere Wertigkeiten übertragen, müssen entsprechende weitere Teiler ermittelt werden. Nachdem das Arbitartionssymbol vom Transponder ausgewertet wurde ("0", "1"), wird, sofern die Abitrationsbedingungen erfüllt sind, z. B. ein Zähler freigegeben. Diesen wird durch das Freigabesignal entsprechend der Wertigkeit an der Stelle $n+1$ (ref0, ref1) vorgeladen und zählt dann bis zu einer Endmarke. An der Endmarke wechselt der Transponder die Modulation. Nach Durchlaufen der Zeitdauer T3 kann sich dieser Vorgang wiederholen.

Zusätzlich oder alternativ kann der Zähler fortwährend aufwärts oder abwärts zählen. Der Wert des Zählers wird dann mit der Referenzmarke Tref1 bzw. Tref0 entsprechend der Wertigkeit der Bits an der Stelle $n+1$ verglichen. Erreicht der Zähler diesen Wert, wird die Modulation umgeschaltet.
Der Zähler kann dann zur weiteren Stromeinsparung abgeschaltet werden.

Fig. 5 zeigt anhand eines Blockschaltbildes eine Steuereinrichtung innerhalb eines Transponders zur Modulationssteuerung. Der Transponder ist in Fig. 5 mit Bezugszeichen 20 bezeichnet. Der Transponder 20 weist eine Steuereinrichtung 21, eine Zeit-Steuer-Einheit 22, beispielsweise ein Zähler, und einen Modulator 23, die innerhalb des Transponders 20 angeordnet sind, auf.

Die Steuereinrichtung 21 ist im Empfangspfad typischerweise über eine Verbindungsleitung und einer Sende/Empfangseinrichtung 24 mit der Sende/Empfangsantenne 25 gekoppelt. Der Steuereinrichtung 21 wird von der in Fig. 5 nicht dargestellten Basisstation über die Sende-Empfangseinrichtung 24 ein Abitrationssymbol AS1 übermittelt, welches in dem darin enthaltenen Abfragebereich eine kodierte Information aufweist. In gleicher Weise wird der Steuereinrichtung 20, die z. B. als so genannte FSM-Einheit (FSM= finit state machine) ausgebildet ist, ein Vergleichswert VS1 oder ein Referenzwert zugeführt. Im Sendepfad ist der Modulator 23 über die Sende/Empfangseinrichtung 24 mit der Sende/Empfangsantenne 25 gekoppelt.

Die Steuereinrichtung 21 startet und stoppt dabei über ein entsprechendes Start/Stop-Signal ST1 den Zähler 22. Der Zähler 22 ist typischerweise als Aufwärtszähler ausgebildet und zählt fortwährend weiter und ermittelt somit einen Zählerstand, der in Form eines IST-Wertes IST1 an die Steuereinrichtung 21 übermittelt wird.

Mittels der in Fig. 5 dargestellten Steuereinrichtung 21 ist es möglich, kontrollierte Modulationsänderungen im Transponder 20 im Zeitbereich durchzuführen. Eine Anpassung an die jeweiligen Bandbreitenbestimmungen ist durch die Basisstation durch Vorgabe einer Vergleichswertes VS1, der die Referenzdauer Tref enthält, möglich.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Die Erfindung sei insbesondere nicht ausschließlich auf RFID-Systeme beschränkt, sondern lässt sich selbstverständlich auch erweitern, beispielsweise für die Einzelteilerkennung (engl: item identification). Häufig müssen einzelne Teile nicht eindeutig erkannt werden. Hier reicht es auch meist aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen werden. Als Beispiel für eine solche so genannte ferngesteuerte Sensoranwendung sei auf einen Temperatursensor, einen Drucksensor oder dergleichen verwiesen.

Die Erfindung ist auch nicht ausschließlich auf Selektionsverfahren im Zusammenhang mit Transponderarbitration verwendbar, sondern lässt sich — sofern dies sinnvoll ist — auch zur Kodierung bei der herkömmlichen Datenkommunikation einsetzen.

Das vorstehend beschriebene Datenkommunikationssystem und -verfahren wurden anhand des Prinzips "Reader talks first"-Prinzip beschrieben. Denkbar wäre natürlich auch das Prinzip "Tag talks first", bei dem die Basisstation auf eine Anfrage eines Transponders (Tag) wartet. Allerdings weist dieses Prinzip eine schlechtere Reaktionszeit auf, so dass vor allem bei modernen so genannten "long range" Datenkommunikationssystem das "Reader talks first"-Prinzip eingesetzt wird.

Bezugszeichenliste

1 Informationspaket
2 Kopfabschnitt
3 Mittelabschnitt
4 Endabschnitt
5 Datenfeld
6 Sicherungsfeld

7    EOT-Symbol

10    Arbitrationssymbol
11    Anfrage-/Abfragebereich
12    Antwortbereich
13    FSK-modulierte Antwortsignale, Backscatter-basierte Antwortsignale
14    Signalwechsel
15    diracähnliche Impulse
16    diracähnliche Impulse
17    Referenzmarke
18    Abschnitte
19    Trägersignal
20    Transponder
21    Steuereinrichtung
22    Zeitsteuereinheit, Zähler
23    Modulator
24    Sendeempfangseinrichtung
25    Sendeempfangsantenne

IST1         Ist-Wert
ST1          Start-Stopp-Signal
AS1          Arbitrationssymbol
VS1          Vergleichssignal
Tref         Referenzzeitdauer
T1           Zeitdauer eines Arbitrationssymbols
T2, T3       Zeitdauer eines Abschnitts
t0 - t3      Zeitpunkte
Tref1, Tref0    Referenzzeitdauer für eine "1" oder "0"

A    Trägersignal
B    Arbitrationssignal
C    Anfragebereich
D    Antwortbereich
E    modulierte Antwortsignale
F    Signalwechsel
T11    Dauer des Anfragesignals
T12    Dauer des Antwortsignals
Tx    Zeitpunkt eines Signalwechsels
Sh    hoher logische Pegel
SI    niedriger logischer Pegel

**Patentansprüche**

1.  Selektionsverfahren zum Selektieren zumindest eines im Ansprechbereich einer Basisstation befindlichen Transponders, die über eine drahtlose bidirektional Datenkommunikationsstrecke miteinander gekoppelt sind, bei dem die Basisstation ein elektromagnetisches Trägersignal aussendet, welches zumindest ein Arbitrationssymbol aufweist, wobei jedes Arbitrationssymbol einen Anfragebereich aufweist, in dem von der Basisstation Daten aufcodiert sind, und einen Antwortbereich aufweist, der von dem Transponder zur Codierung und Modulation von Informationen für die Datenrückübertragung nutzbar ist, wobei die Selektion eines Transponders auf der Basis unterscheidbarer Zeitpunkte für die Modulation im Zeitbereich erfolgt, die aus einer Referenzzeit gebildet werden, welche aus dem Arbitrationssymbol selbst abgeleitet wird.

2.  Verfahren nach Anspruch 1,
    **dadurch gekennzeichnet,**
    **dass** die Modulation der für die Datenrückübertragung vorgesehenen Information sowie deren Auswertung durch die Basisstation im Zeitbereich erfolgt.

**3.** Verfahren nach wenigstens einem der vorstehenden Ansprüche,
**dadurch gekennzeichnet,**
**dass** der Anfragebereich und Antwortbereich durch unterschiedliche Amplituden des Trägersignals definiert sind, wobei der Anfragebereich einen ersten logischen Pegel und der Antwortbereich einen zweiten logischen Pegel aufweisen und wobei die unterscheidbaren Zeitpunkte durch Signalwechsel zwischen benachbarten Anfragebereichen und Antwortbereichen definiert sind.

**4.** Verfahren nach wenigstens einem der vorstehenden Ansprüche,
**dadurch gekennzeichnet,**
**dass** die im Antwortbereich codierten Informationen im Vollduplexverfahren (Backscatter) zu der Basisstation zurück übertragen werden.

**5.** Verfahren nach Anspruch 4,
**dadurch gekennzeichnet,**
**dass** für die Datenrückübertragung unter Verwendung eines Backscatter-verfahrens erfolgt.

**6.** Verfahren nach wenigstens einem der vorstehenden Ansprüche,
**dadurch gekennzeichnet,**
**dass** das Verfahren zur Selektion von Gruppen von Transpondern vorgesehen ist.

**7.** Verfahren nach wenigstens einem der vorstehenden Ansprüche,
**dadurch gekennzeichnet,**
**dass** die Referenzzeit aus der Dauer eines Arbitrationssymbols (Rahmens) oder aus der Dauer eines anderen Symbols des Trägersignals abgeleitet wird.

**8.** Verfahren nach wenigstens einem der vorstehenden Ansprüche,
**dadurch gekennzeichnet,**
**dass** die Modulationszeitpunkte direkt aus der Referenzzeit durch binäres Teilen der Referenzzeit in gleich große Zeitabschnitte oder durch binäres Vervielfachen der Referenzzeit berechnet wird, wobei für unterschiedliche Modulationszeitpunkte eine unterschiedliche Anzahl und/oder ein unterschiedliches Vielfaches der Zeitabschnitte vorgesehen sind.

**9.** Verfahren nach Anspruch 8,
**dadurch gekennzeichnet,**
**dass** zur Codierung zweier unterscheidbarer Modulationszeitpunkte drei gleich große Zeitabschnitte vorgesehen sind, wobei jeder Zeitabschnitt der Referenzzeit selbst oder einem binären Vielfachen der Referenzzeit entspricht. (Summation)

**10.** Verfahren nach Anspruch 8,
**dadurch gekennzeichnet,**
**dass** zur Codierung zweier unterscheidbarer Modulationszeitpunkte drei gleich große Zeitabschnitte vorgesehen sind, die durch Teilen aus der Referenzzeit abgeleitet werden.

**11.** Verfahren nach wenigstens einem der Ansprüche 9 oder 10,
**dadurch gekennzeichnet,**
**dass** die Referenzzeit und die Dauer eines Arbitrationssymbols durch die Basisstation so vorgegeben werden, dass durch Teilen der Referenzzeit durch vier gleich große Zeitabschnitte drei dieser Zeitabschnitte für die Codierung der beiden unterscheidbaren Modulationszeitpunkte verwendbar sind.

**12.** Verfahren nach wenigstens einem der vorstehenden Ansprüche,
**dadurch gekennzeichnet,**
**dass** mehrere Arbitrationssymbole vorgesehen sind, die jeweils eine gleiche Symboldauer aufweisen.

**13.** Verfahren nach wenigstens einem der vorstehenden Ansprüche,
**dadurch gekennzeichnet,**
**dass** eine Master-Slave-basierte Datenkommunikation zwischen Basisstation und Transponder vorgesehen ist, bei von der Basisstation elektromagnetische Trägersignale ausgesendet werden, auf denen Informationspakete (1) aufmoduliert sind, wobei jeweils ein Informationspaket (1) einen Kopfabschnitt (2), einen Mittelabschnitt (3) und einen Endabschnitt (4) aufweist, wobei der Kopfabschnitt zur Steuerung der Datenkommunikation vorgesehen ist.

14. Verfahren nach Anspruch 13,
**dadurch gekennzeichnet,**
**dass** die Referenzzeit im Kopfabschnitt übertragen wird.

15. Verfahren nach wenigstens einem der vorstehenden Ansprüche,
**dadurch gekennzeichnet ,**
**dass** die Modulation durch einen Zähler, insbesondere durch eine analoge Zeitmesseinheit, gesteuert wird.

16. Verfahren nach Anspruch 15,
**dadurch gekennzeichnet,**
**dass** der Zähler dazu ausgelegt ist, nach dem Beginn der Modulation den Endpunkt der Modulation zu bestimmen.

17. Verfahren nach einem der Ansprüche 15 oder 16,
**dadurch gekennzeichnet,**
**dass** der Zähler lediglich zum Zeitpunkt der Modulation für die Datenrückübertragung aktiv ist und insbesondere nach dem Erreichen des Endzeitpunktes inaktiv geschaltet wird.

18. Verfahren nach einem.der Ansprüche 15 bis 17,
**dadurch gekennzeichnet,**
**dass** der Zähler mit einem fest definierten Startzeitpunkt zu zählen beginnt und ein aktueller Zählerstand des Zählers ständig mit weiteren Referenzdauern die die Modulationszeitpunkte definieren, verglichen wird, wobei die Modulation geändert wird, falls der aktuelle Zählerstand des Zählers eine der weiteren Referenzdauern erreicht.

FIG.1

FIG.2a

FIG.2b

FIG.2c

$$T_{ref} > T_1$$

FIG.3a

$$T_2 = \tfrac{1}{4} T_{ref}$$

$T_2$ $T_2$ $T_2$

FIG.3b

$$T_2 = \tfrac{1}{3} T_1$$

$T_2$ $T_2$

FIG.3c

FIG.4

$T_1$

"0", "1", EOT

"1" "1"

$t_0$ $t_1$ $T_{refl}$ $t_2$ $T_{refl}$ $t_3$ $t$

$T_3$ $T_3$

FIG.5

FIG.6a

FIG.6b

FIG.6c

EP 1 699 001 A1

**Europäisches**
**Patentamt**

## EUROPÄISCHER RECHERCHENBERICHT

Nummer der Anmeldung

EP 06 00 3876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 102 04 346 A1 (ATMEL GERMANY GMBH) 14. August 2003 (2003-08-14) * das ganze Dokument * ----- | 1 | INV. G06K19/07 G06K7/00 |
| D,A | DE 101 38 217 A1 (ATMEL GERMANY GMBH) 20. März 2003 (2003-03-20) * das ganze Dokument * ----- | 1 | |

RECHERCHIERTE
SACHGEBIETE (IPC)

G06K

Der vorliegende Recherchenbericht wurde für alle Patentansprüche erstellt

| Recherchenort | Abschlußdatum der Recherche | Prüfer |
|---|---|---|
| Den Haag | 28. Juli 2006 | de Ronde, J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 3876

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2006

| Im Recherchenbericht angeführtes Patentdokument | Datum der Veröffentlichung | Mitglied(er) der Patentfamilie | Datum der Veröffentlichung |
|---|---|---|---|
| DE 10204346 A1 | 14-08-2003 | WO 03065285 A1<br>EP 1470519 A1<br>US 2005128130 A1 | 07-08-2003<br>27-10-2004<br>16-06-2005 |
| DE 10138217 A1 | 20-03-2003 | WO 03015333 A2<br>EP 1417631 A2<br>US 2003133435 A1 | 20-02-2003<br>12-05-2004<br>17-07-2003 |

EPO FORM P0461

Für nähere Einzelheiten zu diesem Anhang : siehe Amtsblatt des Europäischen Patentamts, Nr.12/82